(19)

Europäisches
Patentamt
European
Patent Office
Office européen
des brevets

(11) **EP 3 904 997 B1**

(12) **EUROPEAN PATENT SPECIFICATION**

(45) Date of publication and mention
of the grant of the patent:
**07.08.2024 Bulletin 2024/32**

(21) Application number: **20172025.7**

(22) Date of filing: **29.04.2020**

(51) International Patent Classification (IPC):
**G05D 1/644** *(2024.01)*   **G01C 21/00** *(2006.01)*
**G05D 1/693** *(2024.01)*   **G05D 1/698** *(2024.01)*
**G05D 107/60** *(2024.01)*   **G05D 109/10** *(2024.01)*

(52) Cooperative Patent Classification (CPC):
**G05D 1/644; G01C 21/005; G01C 21/206;
G05D 1/633; G05D 1/693; G05D 1/6987;**
G05D 2107/60; G05D 2109/10

(54) **METHOD AND DEVICE FOR GROUP-AWARE MULTI-AGENT MOTION PATH PLANNING**

VERFAHREN UND VORRICHTUNG ZUR PLANUNG VON GRUPPENBEWUSSTEM
MULTI-AGENTENBEWEGUNGSBAHNPLANUNG

PROCÉDÉ ET DISPOSITIF DE PLANIFICATION DE TRAJECTOIRE DE MOUVEMENT
MULTI-AGENTS AYANT CONSCIENCE DE GROUPE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.11.2021 Bulletin 2021/44**

(73) Proprietor: **Robert Bosch GmbH
70442 Stuttgart (DE)**

(72) Inventors:
• **Palmieri, Luigi
71229 Leonberg (DE)**
• **Linder, Timm
71032 Boeblingen (DE)**

(56) References cited:
**US-A1- 2015 284 010     US-A1- 2018 172 450**

• **SHARON GUNI ET AL: "Conflict-based search for
optimal multi-agent pathfinding", ARTIFICIAL
INTELLIGENCE, ELSEVIER SCIENCE
PUBLISHER B.V., AMSTERDAM, NL, vol. 219, 2
December 2014 (2014-12-02), pages 40 - 66,
XP029119714, ISSN: 0004-3702, DOI:
10.1016/J.ARTINT.2014.11.006**
• **ZHAO HAITAO ET AL: "Self-Adaptive Collective
Motion of Swarm Robots", IEEE TRANSACTIONS
ON AUTOMATION SCIENCE AND ENGINEERING,
IEEE SERVICE CENTER, NEW YORK, NY, US, vol.
15, no. 4, 1 October 2018 (2018-10-01), pages 1533
- 1545, XP011691034, ISSN: 1545-5955, [retrieved
on 20181004], DOI: 10.1109/TASE.2018.2840828**
• **KEN SUGAWARA ET AL: "Collective Motion and
Formation of Simple Interacting Robots",
INTELLIGENT ROBOTS AND SYSTEMS, 2006
IEEE/RSJ INTERNATIONAL CONFERENCE ON,
IEEE, PI, 1 October 2006 (2006-10-01), pages 1062
- 1067, XP031006215, ISBN: 978-1-4244-0258-8**

## Description

Technical Field

The present invention is related to the field of motion path planning for multi-agent systems considering the presence of multiple objects and/or individuals.

Technical background

In general, path planning approaches for multi-agent systems distinguish between decoupled path planning and the centralized path planning. In the decoupled path planning approaches, each agent computes its path by avoiding conflicts. Due to the parallel computation, decoupled path planning can be performed relatively fast, but optimality and even completeness are not always guaranteed.

In contrast thereto, coupled path planning approaches searches the entire state space considering all the agents' states, such as known from an A*-based algorithm.

While most path planning algorithms consider the presence of an object or individual as an obstacle for the motion path, the presence of groups of individuals is more difficult to consider, as also motion paths between individuals of a single group should be avoided.

Document US 2015/0284010 A1 discloses a method of providing shared control over movement of a vehicle within a space, wherein a user input related to a velocity for the vehicle within the space is received, wherein the user input is processed with a local motion planner selectively adjusting the velocity based on a set of predefined constraints and presence of neighboring vehicles in the space to generate a trajectory for the vehicle in the space. Motion control signals including the trajectory to the vehicle are communicated; and drive mechanisms in the vehicle are operated based on the motion control signals to move the vehicle from a first position to a second position within the space for an upcoming time period. Document US 2018/0172450 A1 is related to systems and methods related to roadmaps for robotic devices are provided. A computing device can receive a roadmap representing a plurality of paths through an environment. The computing device can discretize the roadmap to obtain a discrete planning graph having a plurality of states corresponding to discretized segments of the plurality of paths of the roadmap such that states corresponding to adjacent discretized path segments are connected in the discrete planning graph. The computing device can provide a route through the environment for a robotic device based on the determined sequence of states.

Document HARON GUNI ET AL: "Conflict-based Search for optimal multi-agent pathfinding", ARTIFICIAL INTELLIGENCE, ELSEVIER SCIENCE PUBLISHER B.V., AMSTERDAM, NL, vol. 219, 2 December 2014, pages 40-66 discloses a Conflict Based Search (CBS) multi-agent pathfinding algorithm.

ZHAO HAITAO ET AL: "Self-Adaptive Collective Motion of Swarm Robots",IEEE TRANSACTIONS ON AUTOMATION SCIENCE AND ENGINEERING, IEEE SERVICE CENTER, NEW YORK, NY, US, vol. 15, no. 4, 1 October 2018 (2018-10-01), pages 1533-1545, discloses a self-adaptive collective motion algorithm that enable swarm robots to move along a preplanned path from source to a destination in 3-D space.

KEN SUGAWARA ET AL: "Collective Motion and Formation of Simple Interacting Robots",INTELLIGENT ROBOTS AND SYSTEMS, 2006 IEEE/RSJ INTERNATIONAL CONFERENCE ON, IEEE, PI, 1 October 2006 (2006-10-01), pages 1062-1067, discloses a variety of collective behaviour of multi-robot system introducing simple dynamics between the robots. Summary of the invention

According to the present invention, a method is provided for motion path planning of multiple agents in a multi-agent system according to claim 1 as well as a device, an agent and the multi-agent system according to the further independent claims.

Further embodiments are indicated in depending subclaims.

According to a first aspect a computer-implemented method is provided according to claim 1.

The above method is related to a multi-agent path finding problem according to a coupled path planning approach which is performed in a central unit being in communication with multiple agents. The central unit obtains all information about poses of the multiple agents, objects and groups of objects and determines motion paths for all the multiple agents. Conflicts of one agent with other agents and with obstacles, objects, individuals and groups of objects/individuals are avoided by the path planning algorithm carried out in the central unit.

One common multi-agent path planning algorithm is called the conflict-based search (CBS) as disclosed in G. Sharon et al., "Conflict-based search for optimal multi-agent path finding", Proceedings of the 26th AAAE Conference on Artificial Intelligence, p. 563 to 569.

Particularly, the conflict-based motion planning may include considering a constraint tree built with nodes defining constraints for at least one of the agents.

Basically, conflict-based search is a two-level algorithm wherein the high-level search is performed in a constraint tree whose nodes include constraints on time and location for a single agent. At each node in the constraint tree, a low-level search is performed to find paths for all of the multiple agents under the constraints given by the high-level node. In the high-level algorithm part, the constraint tree is searched. Each node in the constraint tree contains a set of constraints imposed on each agent, a single consistent solution including one path for each agent that is consistent with the set of constraints given for the respective node, and the total costs of the current solution.

Once a consistent path has been found by any suitable path finding algorithms for each agent, the found paths have to be checked with respect to the paths of each other agent by simulating the movement of the agents along their planned paths. If all agents reach their goal without any conflicts, e.g. no collision of two agents occurred, the node of the constraint tree is declared as the goal node and the solution can be returned. If, however, while performing the validation, a conflict is found for two or more agents, the validation is stopped, and the node is declared as non-goal.

The key idea of the conflict-based search algorithm is to grow a set of constraints for each agent and find paths that are consistent with these constraints. If these paths still have conflicts and are thus invalid, the conflicts are resolved by adding new constraints. The high-level tree path (building the constraint tree) therefore basically is for finding and adding constraints.

Given a non-goal node of the constraint tree, whose solution includes a conflict, it is known that in any valid solution at most one of the conflicting agents may occupy the vertex v at time t. Therefore, at least one of the constraints for at least one of the agents must hold. Consequently, the algorithm generates two new nodes for the constraint tree as children of the non-goal node each adding one of these constraints to the previous set of constraints. For each new constraint tree node, the low-level search algorithm part is only activated for a single agent for which the new constraint was added. The low-level search is invoked for individual agents to determine an optimal path that is consistent with the individual constraints associated with the given node of the constraint tree (which also includes all constraints of the parent nodes up to the root node).

The constraint tree is searched for goal nodes using a focal search wherein the costs of the constraint tree node is determined. In the low-level path finding algorithm, the focal search is applied to find a consistent single path for an agent wherein the cost functions depend on a conflict heuristic.

Any optimal single agent path finding algorithm (low-level algorithm part) can be applied for the low-level algorithm part of the conflict-based search. In general, multi-agent path finding (MAPF) is the problem of finding a set of feasible paths for a set of agents with specific individual start and goal poses. The path is developed along vertices in a state space map. Possible path finding algorithms are A*, RRT*, BIT* and the like.

According to the above method, the conflict heuristic shall be based on conflicts with moving objects/individuals and their group affiliations. Therefore, based on agent sensors, individuals and/or groups of individuals are detected and current poses and velocities of objects/individuals and groups of objects/individuals moving within the environment in which the agents shall move are detected by a sensor system.

The path planning is made depending on interaction costs. While generally, time to goal is one important cost factor for motion planning, in an environment with dynamic objects further cost factors can be considered, which allows to reduce the disturbance of dynamic objects/individuals and/or groups of objects/individuals as low as possible.

So the interaction costs may include agent costs which depend on at least one of obstacle repulsive costs indicating costs for moving with respect to a static obstacle, interactive costs between the agent depending on a distance between the considered agent with each of the other agents, and the acceleration costs indicating the acceleration of the considered agent.

According to above method, an individual-based conflict heuristic is proposed which is based on a group and a social force-field computation. The force field is a means to define an impact on the agent which increases or decreases the movement costs as the "energy consumption" to move against the force increases and the "energy consumption" to move with the force decreases.

The force field is based on the poses and velocities of the objects/individuals and the group of objects/individuals. To each of the object/individual I a force is computed as

$$\frac{dv_i}{dt} = f_i + f_{wall} + \sum_i f_{ij} + f_i^{group}$$

with $f_i$ being the goal force, $f_{wall}$ being an obstacle repulsive force, $f_{ij}$ being the interactive force between the considered agent and another agent, $f_i^{group}$ being the force related to belonging to a group of objects/individuals and $\frac{dV_i}{dt}$ being the acceleration of the considered agent.

The group force $f_i^{group}$ can be expressed as

$$f_i^{group} = f_i^{vis} + f_i^{att} + f_i^{rep} ,$$

$f_i^{vis}$ corresponds to a force that measures how much an object/individual belonging to the group moves forward to the center of the group. This is based on the assumption that people belonging to the group stay as close as possible and interact with each other. $f_i^{att}$ corresponds to a force by which the considered agent is attracted to the center of the group of individuals. This is based on the assumption that people belonging to the group stay as close as possible and interact to each other. $f_i^{rep}$ corresponds to a force by which the considered agent repulses from overlapping or a collision with another agent.

The force field is computed for each object/individual and each group of objects/individuals detected. Once the force field is computed, the force field is used as an additional cost term in an enhanced conflict-based search planning approach.

Adding the additional cost term in the heuristic function allows to consider the presence of individuals in the path planning, which allows the agents to move smoothly without conflicts around individuals and group of individuals.

Brief description of the drawings

Embodiments are described in more detail in conjunction with the accompanying drawings in which:

Figure 1    shows schematically a system with multiple agents targeting for a goal node in an environment with individuals and a group of individuals;

Figure 2    a flowchart illustrating the method for considering the individuals and a group of individuals for the motion path planning algorithms; and

Figure 3    a pseudocode illustrating the high-level algorithm part of the described method.

Description of embodiments

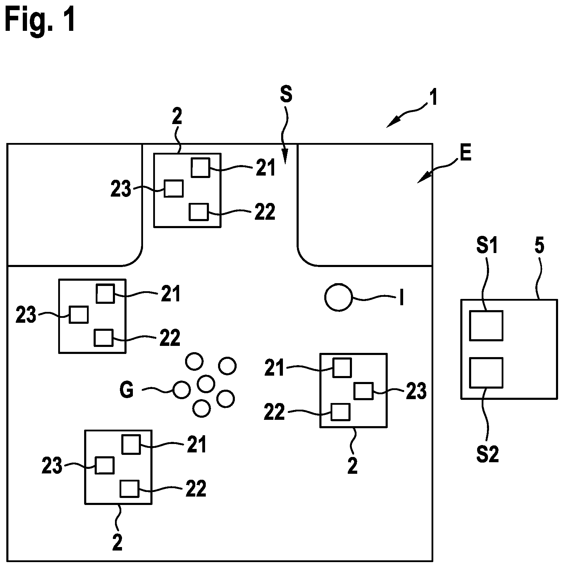

Figure 1 shows a multi-agent system 1 with a number of movable agents 2 designed to move within a free space S in the environment E. The free space S is defined as the set of positions onto or over which each agent can generally move.

The free space S may include obstacles as objects which can be stationary or dynamic. Dynamic obstacles may include an object/individual I or a group of objects/individuals G. Objects form a group of objects if the distance between each two of the objects within the group is lower than a given distance.

A central unit 5 is provided which is in communication with each of the agents 2.

Each agent 2 has a sensor system 21 and an actuation system 22. The sensor system 21 may be configured to detect the environment and may also be configured to detect their own pose, i.e. the position and the orientation, and velocities. Furthermore, the sensor system 21 may be configured to track the objects I and groups of objects G being or moving through the free space S. This information may be communicated to the central unit 5.

By means of the actuation system 22, the agent 2 may move along a motion path (trajectory) which is communicated by the central unit to each of the agents 2. Control of communication with the central unit 5 and effecting the movement according to instructions of a motion path is made by means of a control unit 23 of each agent 2. Such a sensor system can be based on radar and/or Lidar sensors that could use the input from other sensor modalities, such as monocular, stereovision or RGB-D sensors. The readings of these agent sensor systems 21 or global sensors are given as input to a person/group tracker which could be a single monolithic component or a separate module that communicates with the central unit.

In the central unit 5, a pose and a velocity of each agent 2 are obtained either by a global sensor system 52 overviewing the environment E and locating the poses and motion of the agents 2 in the environment. Alternatively, the poses and velocities of the agents 2 can be received from the agents 2 so that the central unit 5 has available knowledge about the poses of the agents 2 for each computational time step at which the motion paths of the agents 2 are updated.

Furthermore, the central unit 5 has available the goal positions of each of the agents 2.

By means of the agent sensors 21 or the global sensor system 52, poses and velocities of individuals I and a group of individuals G in the environment can be detected. The poses of the individuals and the groups of individuals can be determined by a tracking module 51 that obtains the sensor data of the agent sensor system 21 and/or of the global sensor system 52 so that the poses of the individuals are communicated to the central unit 5. In other embodiments, the central unit 5 can include the tracking module 51 or implement a tracking algorithm.

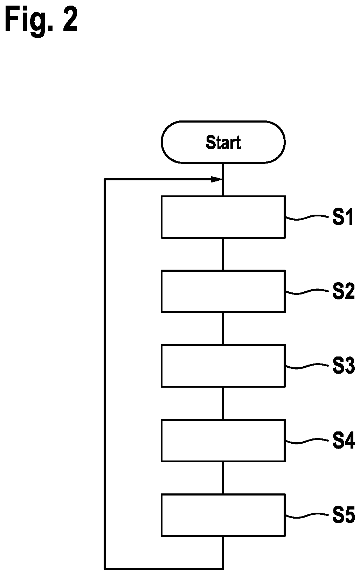

The central unit 5 performs a method to compute motion paths of each of the agents 2 according to the process as described in more detail in conjunction with the flowchart of Fig. 2. The method may be implemented as software or hardware and processed by a processing unit 53, such as a microprocessor, microcontroller or the like. The method is based on an environmental map which is associated to the environment E in which the agents 2 shall move. The environmental map may indicate the poses of the agents 2 and the poses of individual objects I and groups of objects G with their poses (positions and orientations).

In step S1, the poses of the agents 2 are obtained. This can be performed by the global sensors or the agent sensors which are then communicated to the central unit 5 as described above.

In step S2, the sensor data of the sensor system 21 of the agents 2 and the global sensor system 52 are used to also obtain poses and velocities of individual objects I and/or groups of objects G which may be derived from at least one of the agent sensor system 21 or the global sensor system 52.

In step S3, a social force field is computed which is part of a cost function used for the conflict-based search as described below. The social force field is based on the positions and velocities of the individual objects I and the group of objects G and is calculated for each individual object detected. The force field is calculated as follows:

$$\frac{dv_i}{dt} = f_i + f_{wall} + \sum_i f_{ij} + f_i^{group}$$

where $f_i$ is the goal force depending on the distance between the agent and the respective object/individual, $f_{wall}$ is an obstacle repulsive force depending on a distance to a stationary obstacle, $f_{ij}$ the interactive force between two concurring agents which is depending on a distance particularly considered exponentially, $f_i^{group}$ is a force related to belonging to a group of objects and $\frac{dv_i}{dt}$ the acceleration of the agent $A_i$.

The group force $f_i^{group}$ can be expressed as

$$f_i^{group} = f_i^{vis} + f_i^{att} + f_i^{rep}$$

$f_i^{vis}$ corresponds to a force that measures how much an object/individual belonging to the group moves forwards to the center of the group. This is based on the assumption, that people belonging to the group stay as close as possible and interact to each other. $f_i^{att}$ corresponds to a force by which the considered agent is attracted to the center of the group G of individuals. This is based on the assumption, that people belonging to the group stay as close as possible and interact to each other. $f_i^{rep}$ corresponds to a force by which the considered agent repulses from overlapping or a collision with another agent. The center of the group of objects is calculated based on the positions of the agents of the group.

The forces may correspond or may indicate costs for a cost function on which the motion path planning refers to.

Once the force field is computed, the force field is used as a cost term in an enhanced conflict-based search planning approach as performed in step S4.

In step S4, a multi-agent path planning algorithm is carried out.

One common multi-agent path planning algorithm is called conflict-based search CBS. However, for the present invention, any coupled path planning algorithm for multiple agents can be applied, which avoids conflicts and minimize overall agent movement costs.

Conflict-based search is a two-level algorithm wherein the high-level search is performed in a constraint tree (CT) whose nodes include constraints on time and location for a single agent. Such a constraint for a given agent $A_i$ may e.g. be indicated as a tuple ($A_i$,v,t), defining that the agent $A_i$ is prohibited from occupying vertex v at time step t. At each node in the constraint tree, a low-level search is performed to find paths for all of the agents under the constraints given by the high-level node. In the high-level algorithm part, the constraint tree is searched. Each node in the constraint tree contains a set of constraints imposed on each agent, a single consistent solution including one path for each agent that is consistent with the set of constraints given for the respective node, and the total cost of the current solution. The root of the constraint tree contains an empty set of constraints while a successor of a node in the constraint tree inherits the constraints of the current and adds a single new constraint for each of the agents.

The goal node is defined when the solution of the node is valid, i.e. the set of paths for all agents have no conflicts. A conflict may be defined as the tuple ($A_i$, $A_j$,v,t), the agent $A_i$ and agent $A_j$ occupy vertex v at time point t. A node is declared as a non-goal node if a conflict occurred.

Furthermore, a consistent solution can be invalid despite of the fact that the paths are consistent with their individual agent constraints so that these paths still have conflicts.

The key idea of the conflict-based search algorithm is to grow a set of constraints of each of the agents and find paths that are consistent with these constraints. If these paths still have conflicts and are thus invalid, the conflicts are resolved by adding new constraints. The high-level algorithm path (building the constraint tree) therefore basically is for finding and adding constraints.

Given a node of the constraint tree, the low-level search is invoked for individual agents to determine an optimal path that is consistent with the individual constraints associated with the given node of the constraint tree. Any optimal single agent path finding algorithm (low-level algorithm part) can be applied for the low-level algorithm part of the conflict-based search. Possible path finding algorithms are A*, RRT*, BIT* and the like. In general, multi-agent path finding (MAPF) is the problem of finding a set of feasible paths for a set of agents with specific individual start and goal poses. The path is developed along vertices in a state space map.

In general, the path finding algorithms consider costs of moving an agent along a considered motion path. Here, apart from considering the conventional time to goal costs or the movement costs of the specific agent, the costs defined by a social force field are additionally considered. The determination of this additional interaction costs is explained below.

Once consistent paths have been found by any suitable path finding algorithms for each agent, the found paths have to be checked with respect to the paths of each other agent by simulating the movement of the agents along their planned paths. If all agents reach their goal without any conflicts, e.g. no collision of two agents occurred, the node of the constraint tree is declared as the goal node and the solution and be returned. If, however, while performing the validation, a conflict is found for two or more agents, the validation is stopped and the node is declared as non-goal. Given a non-goal node of the constraint tree, whose solution includes a conflict, it is known that in any valid solution at most one of the conflicting agents may occupy the vertex v at time t. Therefore, at least one of the constraints for at least one of the agents must hold.

Consequently, the algorithm generates at least two new nodes for the constraint tree as children of the non-goal node each adding one of these constraints to the previous set of constraints. For each constraint tree node, it may be provided that the low-level search algorithm part is only activated for a single agent for which the new constraint was added.

The constraint tree is searched for goal nodes using a focal search wherein the costs of the constraint tree node are determined. In the low-level path finding algorithm, the focal search is applied to find a consistent single path for an agent wherein the cost functions depend on a conflict heuristic as described above.

For each agent we have a defined single goal to reach. Once all the goals (or some agents may fail to find it) have been reached, the building of the constraint tree is stopped.

According to the above method, the conflict heuristic shall be based on potential conflicts with moving objects/individuals and their group affiliations.

So, the conflict-based search algorithm makes use of a cost term depending on a force field as described above. The costs are considered over each of the objects/individuals in the environment. The interaction costs consider the sum of all interaction forces applied by each object/individual and/or each group of objects/individuals within the environment. The interaction forces have an impact on the movement costs as they act against or with the agent's motion paths.

In step S5, the agents 2 are controlled according to the determined motion path of the selected goal node.

The process is cyclically performed by a return to step S1.

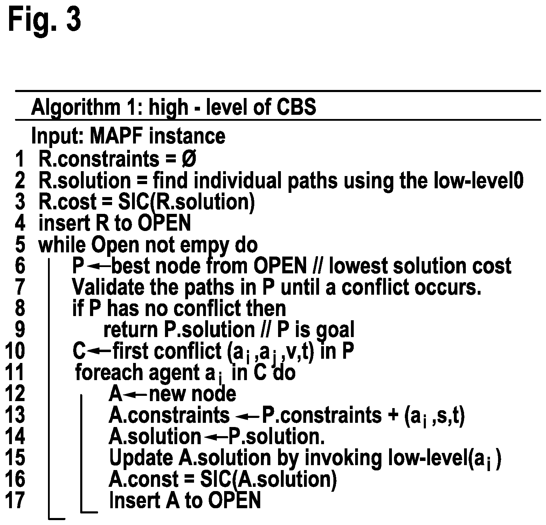

In Fig. 3, the process for determining the motion paths for each of the agents is described in more detail along an exemplary pseudocode for a CBS search algorithm. The multi-agent path finding instance starts with a root node R which has no constraints (line 1) and a solution which is determined by a low-level path planning algorithm based on the constraints of the root node (line 2). This algorithm can be an RRT*, A*. BIT* algorithm or the like. The determined motion paths associated with the root node is evaluated by minimizing the costs R.cost (line 3).

The root node is added to the open node list which includes the tree nodes of the constraint tree to be built (line 4). For each of the entries in the open node list (line 5), it is performed the following steps: The best node which has the lowest solution costs is selected from the open node list (line 6). The solutions of the motion paths for each of the agents is validated for the best node P to determine if a conflict occurs (line 7). If there is no conflict (line 8), the node P and its solutions are returned to indicate that the node P is a goal node.

If a conflict occurred, each agent which is involved in the conflict triggers the generation of a new node with a set of constraints (line 13) to which the determined conflict is added (line 12). A solution is calculated using the low-level algorithm (line 14), so the motion paths for each agent can be associated to the respective node. Furthermore, the costs for the determined solution is further associated to the respective node (line 16).

The newly generated nodes are added to the open node list OPEN (line 17).

This method is continued until no conflict can be determined for each of the nodes of the so-built constraint tree.

**Claims**

1. Computer-implemented method for planning a motion path for multiple agents (2), comprising the steps of:

   - performing (S4) a conflict-based motion planning for the multiple agents (2), wherein conflict-free motion paths for each of the multiple agents (2) are determined depending on movement costs,
   - determining (S2) poses and velocities of one or more individual objects (I) and one or more groups (G) of objects having a distance of less than a given group distance threshold between them;
   - calculating (S3) the movement costs depending on interaction costs of each of the multiple agents (2) with the one or more individual objects (I) and/or the one or more groups (G) of objects,

   **characterized in that**:
   the interaction costs include group costs which depend on at least one of group movement costs that measures how much an individual belonging to the group (G) moves forwards to the center of the group (G) and attraction costs indicating a measure of how an considered agent (2) of the multiple agents (2) is attracted to the center of the group (G) of objects, wherein the conflict-based motion planning includes a conflict-based search considering a constraint tree built with nodes defining constraints for at least one of the agents (2), wherein the conflict-based search is a two-level algorithm wherein a high-level search is performed in a constraint tree whose nodes include constraints on time and location for a considered agent, wherein at each node in the constraint tree, a low-level search is performed to find paths for all of the multiple agents (2) under the constraints given by the high-level node.

2. Method according to claim 1, wherein the interaction costs include agent costs which depend on at least one of obstacle repulsive costs indicating costs for moving with respect to a static obstacle, interactive costs between the agent (2) depending on a distance between the considered agent (2) with each of the other agents (2), and acceleration costs indicating the acceleration of the considered agent (2).

3. Method according to any of the claims 1 to 2, wherein the conflict-based motion planning includes path finding algorithms, particularly A*, RRT* (Rapidly-Exploring Random Trees), and BIT* (Batch-informed Trees).

4. Method according to any of the claims 1 to 3, wherein movement of at least one of the agents is controlled by the respective conflict-free motion path.

5. Device for planning a motion path for multiple agents (2), the device being configured to carry out the steps of:

   - performing a conflict-based motion planning for the multiple agents (2), wherein conflict-free motion paths for each of the multiple agents (2) are determined depending on movement costs,
   - determining poses and velocities of one or more individual objects (I) and one or more groups (G) of objects having a distance of less than a given group distance threshold between them;
   - calculating the movement costs depending on interaction costs of each of the multiple agents (2) with the one or more individual objects (I) and/or the one or more groups (G) of objects,

   **characterized in that**

   - the interaction costs include group costs which depend on at least one of group movement costs that measures how much an individual belonging to the group (G) moves forwards to the center of the group (G), and attraction costs indicating a measure of how a considered agent of the multiple agents (2) is attracted to the center of the group (G) of objects,

   wherein the conflict-based motion planning includes a conflict-based search considering a constraint tree built with nodes defining constraints for at least one of the agents (2), wherein the conflict-based search is a two-level algorithm wherein a high-level search is performed in a constraint tree whose nodes include constraints on time and location for a considered agent, wherein at each node in the constraint tree, a low-level search is performed to find paths for all of the multiple agents (2) under the constraints given by the high-level node.

6. A computer program product comprising instructions which, when the program is executed by a computer, cause the computer to carry out all steps of the method according to any of the claims 1 to 4.

7. A machine readable medium, having a program recorded thereon, where the program is to make the computer execute a method according to any of the claims 1 to 4.

**Patentansprüche**

1. Computerimplementiertes Verfahren zur Planung eines Bewegungspfads für mehrere Agenten (2), umfassend die Schritte:

   - Durchführen (S4) einer konfliktbasierten Bewegungsplanung für die mehreren Agenten (2), wobei konfliktfreie Bewegungspfade für jeden der mehreren Agenten (2) in Abhängigkeit von Bewegungskosten bestimmt werden,
   - Bestimmen (S2) von Posen und Geschwindigkeiten eines oder mehrerer einzelner Objekte (I) und einer oder mehrerer Gruppen (G) von Objekten, die einen Abstand von weniger als einem gegebenen Gruppenabstandsschwellenwert zwischen sich aufweisen;
   - Berechnen (S3) der Bewegungskosten in Abhängigkeit von Interaktionskosten jedes der mehreren Agenten (2) mit dem einen oder den mehreren einzelnen Objekten (I) und/oder der einen oder den mehreren Gruppen (G) von Objekten,

   **dadurch gekennzeichnet, dass**:

   die Interaktionskosten Gruppenkosten beinhalten, die von mindestens den Gruppenbewegungskosten, die messen, wie weit sich ein zur Gruppe (G) gehörendes Individuum vorwärts zur Mitte der Gruppe (G) bewegt, und Anziehungskosten, die ein Maß dafür angeben, wie ein betrachteter Agent (2) der mehreren Agenten (2) zur Mitte der Gruppe (G) von Objekten angezogen wird, abhängen, wobei die konfliktbasierte Bewegungsplanung eine konfliktbasierte Suche unter Berücksichtigung eines Bedingungsbaums beinhaltet, der mit Knoten erstellt wurde, die Bedingungen für mindestens einen der Agenten (2) definieren, wobei die konfliktbasierte Suche ein zweistufiger Algorithmus ist, wobei eine Suche auf hoher Ebene in einem Bedingungsbaum durchgeführt wird, dessen Knoten Bedingungen für Zeit und Standort für einen betrachteten Agenten beinhaltet, wobei an jedem Knoten im Bedingungsbaum eine Suche auf niedriger Ebene durchgeführt wird, um Pfade für alle der mehreren Agenten (2) unter den durch den Knoten auf hoher Ebene gegebenen Bedingungen zu finden.

2. Verfahren nach Anspruch 1, wobei die Interaktionskosten Agentenkosten beinhalten, die von mindestens den Hindernisabstoßungskosten, die die Kosten für die Bewegung in Bezug auf ein statisches Hindernis angeben, den Interaktionskosten zwischen dem Agenten (2), die von einer Entfernung zwischen dem betrachteten Agenten (2) und jedem der anderen Agenten (2) abhängen, und den Beschleunigungskosten, die die Beschleunigung des betrachteten Agenten (2) angeben, abhängen.

3. Verfahren nach einem der Ansprüche 1 bis 2, wobei die konfliktbasierte Bewegungsplanung Pfadfindungsalgorithmen beinhaltet, insbesondere A*, RRT* (Rapidly-Exploring Random Trees) und BIT* (Batch-Informed Trees).

4. Verfahren nach einem der Ansprüche 1 bis 3, wobei die Bewegung von mindestens einem der Agenten durch den jeweiligen konfliktfreien Bewegungspfad gesteuert wird.

5. Vorrichtung zur Planung eines Bewegungspfads für mehrere Agenten (2), wobei die Vorrichtung konfiguriert ist, um die folgenden Schritte auszuführen:

- Durchführen einer konfliktbasierten Bewegungsplanung für die mehreren Agenten (2), wobei konfliktfreie Bewegungspfade für jeden der mehreren Agenten (2) in Abhängigkeit von Bewegungskosten bestimmt werden,
- Bestimmen von Posen und Geschwindigkeiten eines oder mehrerer einzelner Objekte (I) und einer oder mehrerer Gruppen (G) von Objekten, die einen Abstand von weniger als einem gegebenen Gruppenabstandsschwellenwert zwischen sich aufweisen;
- Berechnen der Bewegungskosten in Abhängigkeit von Interaktionskosten jedes der mehreren Agenten (2) mit dem einen oder den mehreren einzelnen Objekten (I) und/oder der einen oder den mehreren Gruppen (G) von Objekten,

**dadurch gekennzeichnet, dass**

- die Interaktionskosten Gruppenkosten beinhalten, die von mindestens den Gruppenbewegungskosten, die messen, wie weit sich ein zur Gruppe (G) gehörendes Individuum vorwärts zur Mitte der Gruppe (G) bewegt, und Anziehungskosten, die ein Maß dafür angeben, wie ein betrachteter Agent der mehreren Agenten (2) zur Mitte der Gruppe (G) von Objekten angezogen wird, abhängen,

wobei die konfliktbasierte Bewegungsplanung eine konfliktbasierte Suche unter Berücksichtigung eines Bedingungsbaums beinhaltet, der mit Knoten erstellt wurde, die Bedingungen für mindestens einen der Agenten (2) definieren, wobei die konfliktbasierte Suche ein zweistufiger Algorithmus ist, wobei eine Suche auf hoher Ebene in einem Bedingungsbaum durchgeführt wird, dessen Knoten Bedingungen für Zeit und Standort für einen betrachteten Agenten beinhaltet, wobei an jedem Knoten im Bedingungsbaum eine Suche auf niedriger Ebene durchgeführt wird, um Pfade für alle der mehreren Agenten (2) unter den durch den Knoten auf hoher Ebene gegebenen Bedingungen zu finden.

6. Computerprogrammprodukt, das Anweisungen umfasst, die bei Ausführung des Programms durch einen Computer den Computer veranlassen, die Schritte eines Verfahrens nach einem der Ansprüche 1 bis 4 auszuführen.

7. Maschinenlesbares Medium, auf dem ein Programm gespeichert ist, wobei das Programm den Computer veranlassen soll, ein Verfahren nach einem der Ansprüche 1 bis 4 auszuführen.

**Revendications**

1. Procédé mis en oeuvre par ordinateur pour la planification d'une trajectoire de mouvement pour de multiples agents (2), le procédé comprenant les étapes suivantes :

- effectuer (S4) une planification de mouvement basée sur les conflits pour les multiples agents (2), dans laquelle les chemins de mouvement sans conflit pour chacun des multiples agents (2) sont déterminés en fonction de coûts de mouvement,
- déterminer (S2) les positions et les vitesses d'un ou de plusieurs objets individuels (I) et d'un ou de plusieurs groupes (G) d'objets dont la distance entre eux est inférieure à un seuil de distance de groupe donné ;
- calculer (S3) les coûts de mouvement en fonction des coûts d'interaction de chacun des multiples agents (2) avec les un ou plusieurs objets individuels (I) et/ou les un ou plusieurs groupes d'objets (G),

**caractérisé en ce que** :

les coûts d'interaction comprennent les coûts de groupe qui dépendent d'au moins un des coûts de mouvement de groupe qui mesure de combien un individu appartenant au groupe (G) se déplace vers le centre du groupe (G) et les coûts d'attraction indiquant une mesure de la façon dont un agent considéré (2) des multiples agents (2) est attiré par le centre du groupe (G) d'objets, la planification de mouvement basée sur les conflits comprend une recherche basée sur les conflits considérant un arbre de contraintes construit avec des noeuds définissant des contraintes pour au moins un des agents (2), la recherche basée sur les conflits étant un algorithme à deux niveaux dans lequel une recherche de haut niveau est effectuée dans un arbre de contraintes dont les noeuds comprennent des contraintes de temps et d'emplacement pour un agent considéré, une recherche de bas niveau étant effectuée à chaque noeud de l'arbre de contraintes pour trouver des chemins pour tous les multiples agents (2) sous les contraintes données par le noeud de haut niveau.

2. Procédé selon la revendication 1, dans lequel les coûts d'interaction comprennent des coûts d'agent qui dépendent d'au moins un des coûts de répulsion d'obstacle indiquant des coûts de déplacement par rapport à un obstacle statique, des coûts d'interaction entre l'agent (2) dépendant d'une distance entre l'agent considéré (2) avec chacun des autres agents (2), et des coûts d'accélération indiquant l'accélération de l'agent considéré (2).

3. Procédé selon l'une quelconque des revendications 1 à 2, dans lequel la planification de mouvement basée sur les conflits comprend des algorithmes de recherche de chemin, en particulier A*, RRT* (Rapidly-Exploring Random Trees), et BIT* (Batch-informed Trees).

4. Procédé selon l'une quelconque des revendications 1 à 3, dans lequel le mouvement d'au moins un des agents est contrôlé par le chemin de mouvement sans conflit respectif.

5. Dispositif de planification d'un chemin de mouvement pour de multiples agents (2), le dispositif étant configuré pour exécuter les étapes suivantes :

- effectuer une planification de mouvement basée sur les conflits pour les multiples agents (2), dans laquelle les chemins de mouvement sans conflit pour chacun des multiples agents (2) sont déterminés en fonction des coûts de mouvement,

- déterminer les positions et les vitesses d'un ou de plusieurs objets individuels (I) et d'un ou de plusieurs groupes (G) d'objets dont la distance entre eux est inférieure à un seuil de distance de groupe donné ;
- calculer les coûts de mouvement en fonction des coûts d'interaction de chacun des multiples agents (2) avec les un ou plusieurs objets individuels (I) et/ou les un ou plusieurs groupes d'objets (G),

**caractérisé en ce que**

- les coûts d'interaction comprennent les coûts de groupe qui dépendent d'au moins un des coûts de mouvement de groupe qui mesure de combien un individu appartenant au groupe (G) se déplace vers le centre du groupe (G), et les coûts d'attraction indiquant une mesure de la façon dont un agent considéré des multiples agents (2) est attiré par le centre du groupe (G) d'objets,

la planification de mouvement basée sur les conflits comprend une recherche basée sur les conflits considérant un arbre de contraintes construit avec des noeuds définissant des contraintes pour au moins un des agents (2), la recherche basée sur les conflits étant un algorithme à deux niveaux dans lequel une recherche de haut niveau est effectuée dans un arbre de contraintes dont les noeuds comprennent des contraintes de temps et d'emplacement pour un agent considéré, une recherche de bas niveau étant effectuée à chaque noeud de l'arbre de contraintes pour trouver des chemins pour tous les multiples agents (2) sous les contraintes données par le noeud de haut niveau.

6. Produit-programme d'ordinateur, comprenant des instructions qui, lorsque le programme est exécuté par un ordinateur, amènent l'ordinateur à accomplir les étapes d'un procédé selon l'une quelconque des revendications 1 à 4.

7. Support lisible par une machine, sur lequel est enregistré un programme, le programme étant destiné à faire exécuter par l'ordinateur un procédé selon l'une quelconque des revendications 1 à 4.

# Fig. 1

# Fig. 2

# Fig. 3

---

### Algorithm 1: high - level of CBS

---

Input: MAPF instance

R.constraints = Ø

R.solution = find individual paths using the low-level0

R.cost = SIC(R.solution)

insert R to OPEN

while Open not empy do

    P ← best node from OPEN // lowest solution cost

    Validate the paths in P until a conflict occurs.

    if P has no conflict then

        return P.solution // P is goal

    C ← first conflict $(a_i, a_j, v, t)$ in P

    foreach agent $a_i$ in C do

        A ← new node

        A.constraints ← P.constraints + $(a_i, s, t)$

        A.solution ← P.solution.

        Update A.solution by invoking low-level($a_i$)

        A.const = SIC(A.solution)

        Insert A to OPEN

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150284010 A1
- US 20180172450 A1

**Non-patent literature cited in the description**

- Conflict-based Search for optimal multi-agent path-finding. **HARON GUNI et al.** ARTIFICIAL INTELLIGENCE. ELSEVIER SCIENCE PUBLISHER B.V, 02 December 2014, vol. 219, 40-66
- Self-Adaptive Collective Motion of Swarm Robots. **ZHAO HAITAO et al.** IEEE TRANSACTIONS ON AUTOMATION SCIENCE AND ENGINEERING. IEEE SERVICE CENTER, 01 October 2018, vol. 15, 1533-1545
- Collective Motion and Formation of Simple Interacting Robots. **KEN SUGAWARA et al.** INTELLIGENT ROBOTS AND SYSTEMS, 2006 IEEE/RSJ INTERNATIONAL CONFERENCE ON. IEEE, 01 October 2006, 1062-1067
- **G. SHARON et al.** Conflict-based search for optimal multi-agent path finding. *Proceedings of the 26th AAAE Conference on Artificial Intelligence,* 563-569